# FASCICULE DE BREVET EUROPEEN

(11) **EP 0 524 036 B1**
(45) Date de publication et mention de la délivrance du brevet: **27.08.1997**
(21) Numéro de dépôt: 92401606.6
(22) Date de dépôt: 10.06.1992
(51) Int. Cl.: H04L 12/28

(54) **Procédé pour désigner un objet fonctionnel distant dans un réseau et unités fonctionnelles**
Verfahren zur Bestimmung eines entfernten, funktionalen Objektes in einem Netzwerk sowie funktionale Einheiten
Method to identify a distant functional object in a network and corresponding functional units

(30) Priorité: 17.07.1991 FR 9109012
(43) Date de publication de la demande: 20.01.1993
(73) Titulaire: EURO CP s.a.r.l., F-94045 Créteil Cédex (FR)
(72) Inventeur: Gilbert, Jérôme, F-92300 Levallois Perret (FR)
(74) Mandataire: Pontet, Bernard

(56) Documents cités:
- EP-A- 0 203 668
- EP-A- 0 315 158
- WO-A-89/04578
- COMPUTER COMMUNICATIONS. vol. 13, no. 1, Januar/Februar 1990, Guilford, GB, pages 27-36; A. Patel et al.:"Introduction to names, addresses and routes in an OSI environment".

## Description

La présente invention concerne un procédé pour désigner un objet fonctionnel distant dans un réseau de communication bidirectionnel reliant entre eux des objets fonctionnels d'un local.

La présente invention concerne également des unités fonctionnelles.

L'invention s'applique aux installations domestiques et aux installations en locaux professionnels.

Dans de telles installations (voir p. ex. EP-A-0 315 158 ; WO-A-89/04 578), on sait organiser les objets fonctionnels en les reliant entre eux par un réseau de communication de manière à permettre à l'utilisateur un pilotage plus perfectionné, plus automatique ou plus commode.

L'invention est mise en oeuvre avec des objets fonctionnels, par exemple des appareils, qui ont la possibilité de communiquer de manière bidirectionnelle. Le ou les supports de transmission utilisés pour réaliser le réseau de communication bidirectionnel peuvent être les courants porteurs, un câble, des moyens optiques ou radio électriques, etc... Les objets fonctionnels distants peuvent être non seulement des appareils, mais aussi des fonctions ou ressources d'appareil, ou encore un organe assurant une fonction de relais vers un appareil éloigné du local.

La structure de réseau la mieux adaptée pour mettre en oeuvre ce procédé est une structure multi-maître multi esclave avec échange possible des rôles. Le mode d'accès au support de transmission sera avantageusement du type à accès multiple avec écoute préalable du support et gestion des collisions.

Ce type d'installations comporte des phases opératoires où un opérateur ou utilisateur doit désigner un objet fonctionnel. C'est par exemple le cas lorsque l'opérateur configure l'installation : il doit alors désigner les objets fonctionnels devant correspondre entre eux, c'est à dire par exemple indiquer, afin que cela soit mis en mémoire, quel objet fonctionnel devra réagir à une commande donnée, par exemple celle d'un programmateur horaire.

On connait les procédés de désignation indirects traditionnels qui s'apparentent à ce que l'on appelle communément de la programmation. Ils nécessitent généralement des compétences particulières et une tournure d'esprit technicienne.

Le but de la présente invention est de proposer un procédé de désignation qui soit particulièrement simple à mettre en oeuvre et ne nécessite pratiquement aucun effort de mémoire même pour un utilisateur de faible compétence technique.

Suivant l'invention, le procédé de désignation d'un objet distant dans un réseau de communication bidirectionnel reliant entre eux des objets fonctionnels d'un local, est caractérisé par les étapes suivantes :
- émission sur le réseau par un premier objet fonctionnel, d'un message de demande de désignation ;
- réception du message de demande de désignation par d'autres objets fonctionnels du réseau et production par ceux-ci d'une excitation sensorielle perceptible par un opérateur ;
- action physique directe, par l'opérateur, sur un second objet fonctionnel parmi ceux qui produisent l'excitation sensorielle ;
- émission par le second objet fonctionnel d'un message de réponse à la demande de désignation, comportant des informations relatives audit second objet fonctionnel ;
- prise en compte du message de réponse, par le premier objet fonctionnel.

L'utilisateur, recevant les excitations sensorielles des objets fonctionnels susceptibles de désignation, n'a qu'à agir physiquement sur l'un d'eux pour que cette action provoque l'émission sur le réseau, par l'objet désigné, d'un message qui sera interprêté comme une désignation.

Ainsi l'invention rompt totalement avec la logique des solutions existantes en ne demandant à l'utilisateur que quelques manipulations d'une simplicité enfantine fondées sur la désignation physique de l'objet fonctionnel après avoir été invité à choisir, par une manifestation sensorielle attirant l'attention.

Le procédé selon l'invention permet de présenter à l'utilisateur une ergonomie satisfaisante tout en étant réalisable sous une forme incluant un programme dans des appareils peu coûteux. Les moyens matériels minimaux pour les relations homme-machine pour la mise en oeuvre de l'invention sont par exemple un ou deux boutons-poussoirs et un voyant lumineux sur chaque objet fonctionnel. Ces boutons et voyants n'ont même pas besoin d'être spécifiques, ils peuvent avoir d'autres fonctions d'interface en-dehors des sessions de désignation d'objet. Ces simples moyens sont suffisants pour guider l'utilisateur et prendre en compte ses choix au cours de toutes les étapes du procédé.

Dans un mode de mise en oeuvre particulièrement intéressant du procédé, le message de réponse à la demande de désignation contient un élément d'adresse de réseau, et la prise en compte du message de réponse consiste pour le premier objet à adopter dans sa propre adresse ledit élément d'adresse de réseau.

On peut ainsi donner à volonté à un appareil nouvellement installé la même adresse de réseau que ceux avec lesquels il devra communiquer, sans que l'utilisateur ait à connaitre cette adresse. Ensuite, lors de l'exploitation de l'installation, les messages comporteront l'adresse de réseau de l'objet fonctionnel émetteur, et seuls les objets fonctionnels ayant la même adresse de réseau prendront en compte ces messages. On peut ainsi créer deux réseaux indépendants dans un même local, et on évite en tout cas de perturber les installations semblables du voisinage. L'invention vise aussi des unités fonctionnelles, adaptées pour la mise en oeuvre du procédé, et comprenant un micro-contrôleur relié à des moyens d'entrée/sortie et à un réseau de communication bidirectionnel via un moyen de transmission bidirectionnel.

Une unité fonctionnelle peut constituer un objet fonctionnel, ou en regrouper plusieurs pouvant être désignés indépendamment les uns des autres.

Une unité fonctionnelle capable d'appeler une désignation est caractérisée en ce que le micro-contrôleur est agencé pour émettre, à la suite du déclenchement par un processus d'ordre supérieur de l'ouverture d'une session de désignation directe d'objet distant, un message de demande de désignation et pour attendre la réception d'un message de réponse comportant des informations nécessaires pour que ledit processus d'ordre supérieur puisse retrouver ultérieurement l'objet fonctionnel ainsi désigné, ladite session de désignation directe étant avortée si aucun message de réponse n'est reçu par le micro-contrôleur au-delà d'une durée de temporisation prédéterminée.

Une unité fonctionnelle capable d'être désignée est caractérisée en ce que le micro-contrôleur est agencé pour recevoir un message de demande de désignation après ouverture d'une session de désignation directe, pour commander alors la production d'une excitation sensorielle, pour détecter une action de l'opérateur sur les moyens d'entrée/sortie pour envoyer un message sur le réseau de communication en cas d'une telle action de l'opérateur, ladite unité fonctionnelle retrouvant sa fonction normale après fermeture de la session de désignation directe.

Les unités fonctionnelles peuvent être à la fois capables d'appeler une désignation et de recevoir une demande de désignation.

D'autres particularités et avantages de l'invention ressortiront encore de la description ci-après, relative à des exemples non limitatifs.

Aux dessins annexés :
- la figure 1 est une vue schématique d'une installation selon l'invention ;
- la figure 2 est un schéma bloc d'une unité fonctionnelle selon l'invention ;
- la figure 3 représente les étapes du procédé pour l'unité fonctionnelle du réseau qui est à l'origine de la demande de désignation directe d'objet distant ; et
- la figure 4 représente les étapes du procédé pour les unités fonctionnelles du réseau à l'exception de celle qui est à l'origine de la demande de désignation directe d'objet distant.

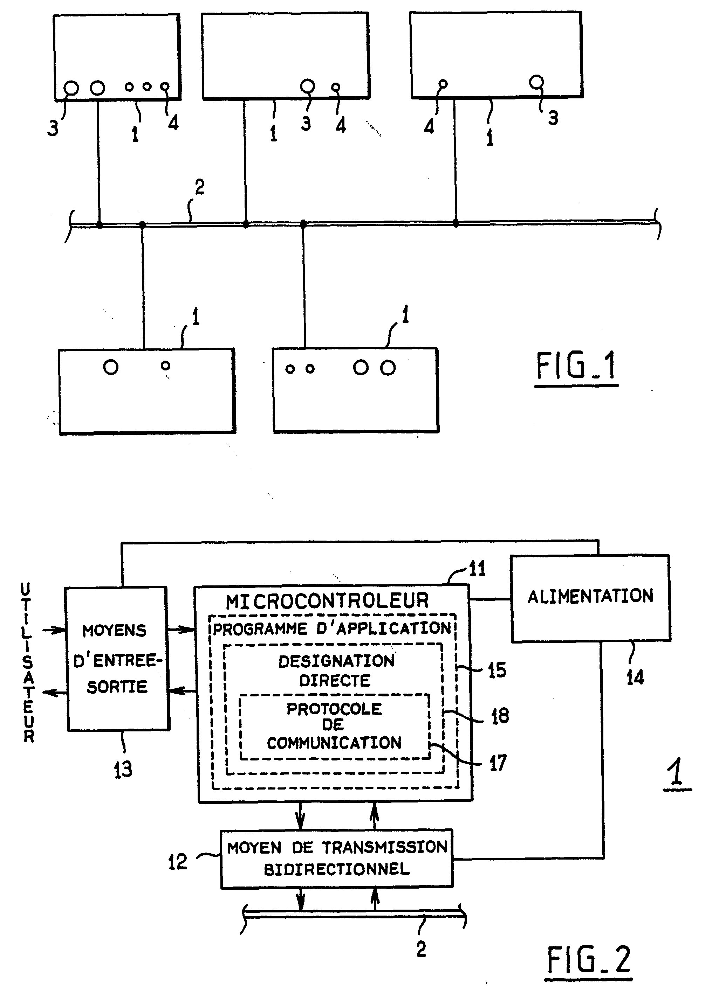

Dans l'exemple représenté à la figure 1, l'installation, volontairement simplifiée, comprend diverses unités fonctionnelles 1, par exemple des appareils électroménagers, reliées les unes aux autres par un réseau de communication bidirectionnel 2 à travers lequel elles peuvent échanger des messages. Les unités fonctionnelles 1 comprennent des boutons de commande ou réglage 3 et des voyants lumineux ou autres indicateurs 4.

Le réseau 2 peut-être constitué par le réseau d'alimentation électrique, auquel cas les messages sont élaborés de manière concrète selon la technique des courants porteurs. Le réseau 2 peut également être constitué par un espace perméable aux ondes radio ou aux signaux infra-rouges.

Comme représenté à la figure 2, chaque unité fonctionnelle comporte un micro-contrôleur 11 relié à des moyens d'entrée/sortie 13 qui font l'interface avec l'utilisateur. En pratique, ces moyens d'entrée/sortie sont constitués par les boutons 3 et voyants lumineux 4 de l'unité fonctionnelle, et aussi, lorsque l'unité est un appareil d'action tel qu'un appareil électroménager, par les actionneurs de l'appareil d'action, qui fournissent à l'utilisateur l'action attendue, par exemple éclairage, chauffage etc.

En fonction des commandes effectuées sur les boutons 3, et le cas échéant des signaux reçus de capteurs, un programme d'application 15 prévu dans le micro-contrôleur 11 gère l'action des voyants lumineux 4 et des actionneurs (lampes, moteurs, résistances chauffantes, relais , etc) faisant partie des moyens d'entrée/sortie 13. Le micro contrôleur 11 est en outre relié à une alimentation 14. Le micro-contrôleur 11 est aussi relié au réseau 2 par l'intermédiaire d'un moyen de transmission bidirectionnel 12, par exemple un modem capable de transformer en message du type courants proteurs les informations reçues du micro contrôleur 11, et inversement de transfomer en signaux acceptables par le micro-contrôleur 11 les messages du type courants proteurs provenant du réseau 2.

Le micro-contrôleur 11 renferme encore un programme de protocole 17 qui gère les échanges d'informations entre le micro-contrôleur, le moyen de transmission bidirectionnel et les moyens d'entrée/sortie.

Le procédé selon l'invention s'intègre dans un procédé plus vaste qu'on appellera ci-après "processus d'ordre supérieur", et débute à l'initiative du processus d'ordre supérieur d'une unité fonctionnelle lorsque ce processus arrive à une étape où il a besoin que l'utilisateur désigne un objet distant.

Le processus d'ordre supérieur, qui est matérialisé par le programme d'application de cette unité fonctionnelle, peut être un procédé de configuration du réseau, dans lequel l'utilisateur doit mettre en correspondance des objets fonctionnels, par exemple mettre en correspondance un appareil de télécommande avec un appareil d'action. C'est aussi le cas lorsqu'il s'agit d'indiquer à un programmateur horaire les objets fonctionnels sur lesquels porte la programmation etc...

Pour l'unité fonctionnelle dont le processus d'ordre supérieur déclenche l'ouverture d'une session de désignation directe d'objet distant, la première étape du procédé de désignation selon l'invention comprend une étape 22 d'envoi sur le réseau 2, à partir de cette unité fonctionnelle, d'un message de demande de désignation directe, à destination des autres unités du réseau ; le message de demande de désignation directe peut-être enrichi de critères servant à restreindre le choix aux seuls objets fonctionnels qui sont pertinents par rapport au contexte dans lequel se trouve le processus d'ordre suppérieur. L'étape suivante (23) consiste à attendre la réception d'un message de réponse à la demande de désignation directe (23). Lorsque ce dernier est reçu (24), la session de désignation directe est terminée et le procédé selon l'invention rend le pilotage de l'unité au processus d'ordre supérieur (25) qui peut ainsi passer à une étape qui suit la désignation. Le message reçu de réponse à une demande de désignation directe, dont une partie au moins sera mise en mémoire par le processus d'ordre supérieur, contient tous les éléments d'information nécessaires pour que le processus d'ordre supérieur puisse retrouver ultérieurement l'objet ainsi désigné. En variante, c'est le procédé de désignation qui peut comporter une étape de mise en mémoire avant la clôture de la session de désignation.

Pour les unités fonctionnelles du réseau autres que celle ayant ouvert la session, le procédé selon l'invention commence par l'étape 31 de réception d'un message de demande de désignation directe.

Ces "autres" unités fonctionnelles sont elles-mêmes régies par leur propre programme d'application 15 matérialisant un processus d'ordre supérieur qui est en général différent de celui de l'unité ayant demandé la désignation. Mais chaque programme d'application comprend une partie "programme de désignation", et la réception d'un message de demande de désignation fait automatiquement passer chaque unité sous la gestion de son programme de désignation.

L'étape suivante consiste à comparer les éventuelles informations de restriction de choix qui se trouvent dans le message de demande, avec les caractéristiques propres de l'appareil.

Les unités dont les caractéristiques ne correspondent pas à la demande omettent ou interrompent toute manifestation sensorielle susceptible de perturber le choix de l'utilisateur (32). La réception d'un message de réponse à la demande de désignation directe (33) interrompt la session de désignation au sein de cette untié et fait repasser l'unité au processus d'ordre supérieur (39).

Au moyen d'une manifestation sensorielle appropriée (35), comme par exemple le clignotement de voyants, les unités dont les caractéristiques correspondent aux critères (34) invitent l'utilisateur à désigner l'objet de son choix.

L'unité sur laquelle le choix de l'utilisateur a porté (38) envoie un message de réponse à la demande de désignation directe (37). Ce message contient tous les éléments d'information nécessaires pour que l'unité ayant demandé la désignation puisse par la suite, dans le processus d'ordre supérieur, retrouver l'objet préalablement désigné. Après l'envoi du message de réponse, le procédé selon l'invention rend le contrôle de l'appareil au processus d'ordre supérieur (39). La session de désignation est ainsi cloturée dans cette unité.

Le procédé selon l'invention, pour les unités sur fonctionnement de chacune de ces unités au processus d'ordre supérieur (39) dès que le message de réponse à la demande de désignation directe est reçu (38).

Pour chaque unité du réseau, une temporisation est lancée dès que l'unité est régie par le procédé selon l'invention. Cette temporisation peut-être réinitialisée à chaque franchissement d'étape du procédé et sa durée peut être, par exemple, de l'ordre de 5 à 10 minutes. Toute inactivité de la part de l'utilisateur d'une durée qui dépasse celle de la temporisation conduit à l'envoi d'un message de fin de session qui provoque l'avortement de la session de désignation directe d'objet distant et rend le pilotage de chaque unité du réseau au processus d'ordre supérieur. Cette temporisation permet d'éviter que le système ne soit bloqué par l'ouverture d'une session de désignation directe qui ne serait pas menée à terme.

Après la session de désignation, mais alors que le processus d'ordre supérieur est encore en cours dans l'unité qui a lancé la session de désignation, les autres unités passent sous le pilotage d'un processus d'ordre supérieur qui est différent de celui qui régit l'unité ayant demandé la désignation. Par exemple, ce processus d'ordre supérieur différent peut-être le processus normal de fonctionnement de l'unité, par exemple la production de chaleur si l'unité est un appareil de chauffage.

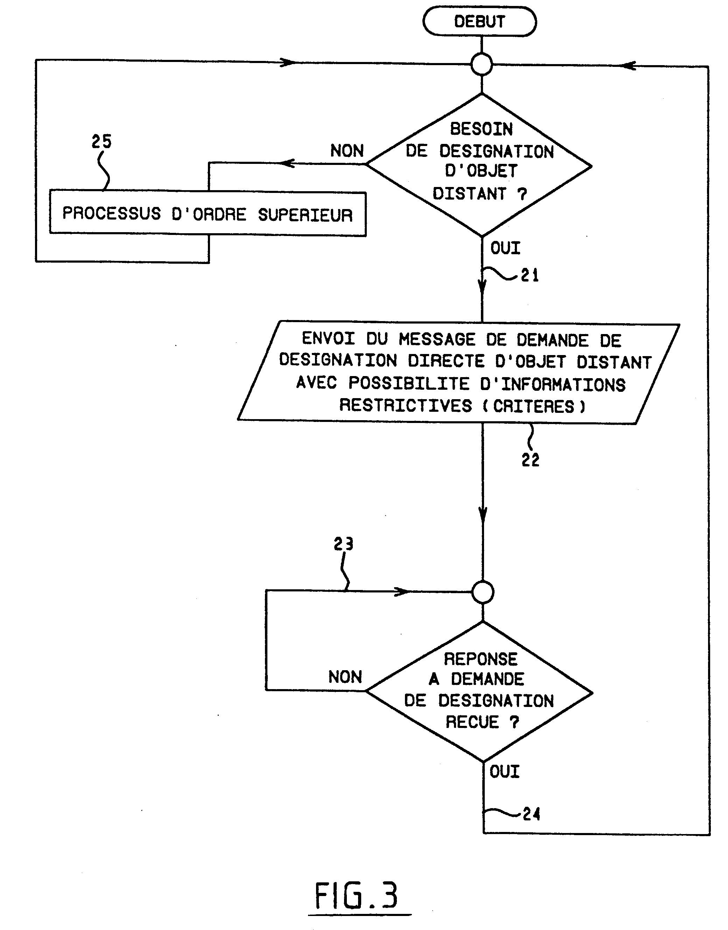

Les unités fonctionnelles peuvent être de trois types. Le premier type est capable d'émettre une demande de désignation, et incapable de réagir à une demande de désignation venant d'une autre unité. Dans ce cas, leur programme de désignation directe 15 de la figure 2 correspond à l'organigramme de la figure 3. Ce type d'unité fonctionnelle peut comporter une commande spécifique d'ouverture du processus d'ordre supérieur pouvant déboucher sur des demandes de désignation. En pratique, ce type d'unité fonctionnelle peut se présenter sous la forme d'un boitier de télécommande, ou encore d'un programmateur. Mais il est également concevable que ce premier type d'unité enclenche automatiquement le processus d'ordre supérieur qui va déboucher sur une demande de désignation. Dans ce cas, plus aucune commande manuelle spécifique n'est nécessaire. C'est par exemple le cas si un appareil délesteur de puissance électrique, à l'approche d'une période d'énergie chère, invite automatiquement à désigner les unités fonctionnelles consommatrices qui devront être automatiquement mises hors fonctionnement lorsque le tarif changera.

Le second type est simplement capable de recevoir un message de demande de désignation, sans pouvoir en émettre. Ce peut être le cas d'un appareil électroménager, qui peut alors se présenter à l'utilisateur de manière tout à fait classique, sans commande ni moyen de signalisation spécifiques au procédé de l'invention. Par exemple, en temps normal, les entrées/sorties par les moyens 13, en particulier les ordres reçus par les commandes manuelles 3 et les indications fournies par les voyants lumineux 4 et autres indicateurs, sont gérées par le programme d'application 15 du micro-contrôleur, constituant le processus d'ordre supérieur. En cas de réception d'un message de demande de désignation, l'unité passe sous la gestion du programme de désignation, ce qui change la fonction des commandes manuelles 3 et voyants 4. L'excitation sensorielle est par exemple produite par un clignotement de tous les voyants, et l'utilisateur peut désigner l'unité en actionnant n'importe laquelle des commandes manuelles 3 reliées au micro-contrôleur. En variante, dans une unité comprenant deux objets fonctionnels différents, par exemple un congélateur et un réfrigérateur, il est possible de restriendre le choix à l'un des objets en ne faisant clignoter que les voyants spécifiques à cet objet et, si les deux objets sont offerts aux choix de l'utilisateur, il est possible de permettre à l'utilisateur de désigner spécifiquement l'un des objets et pas l'autre en actionnant une commande de l'objet qu'il veut désigner. Le message de réponse à la demande de désignation comporte alors un élément d'identification de l'objet désigné parmi les deux objets de l'unité. Une fois la session de désignation terminée, les commandes 3, voyants 4 et autres indicateurs de l'untié fonctionnelle ayant reçu le message de demande de désignation reprennent leur fonction normale.

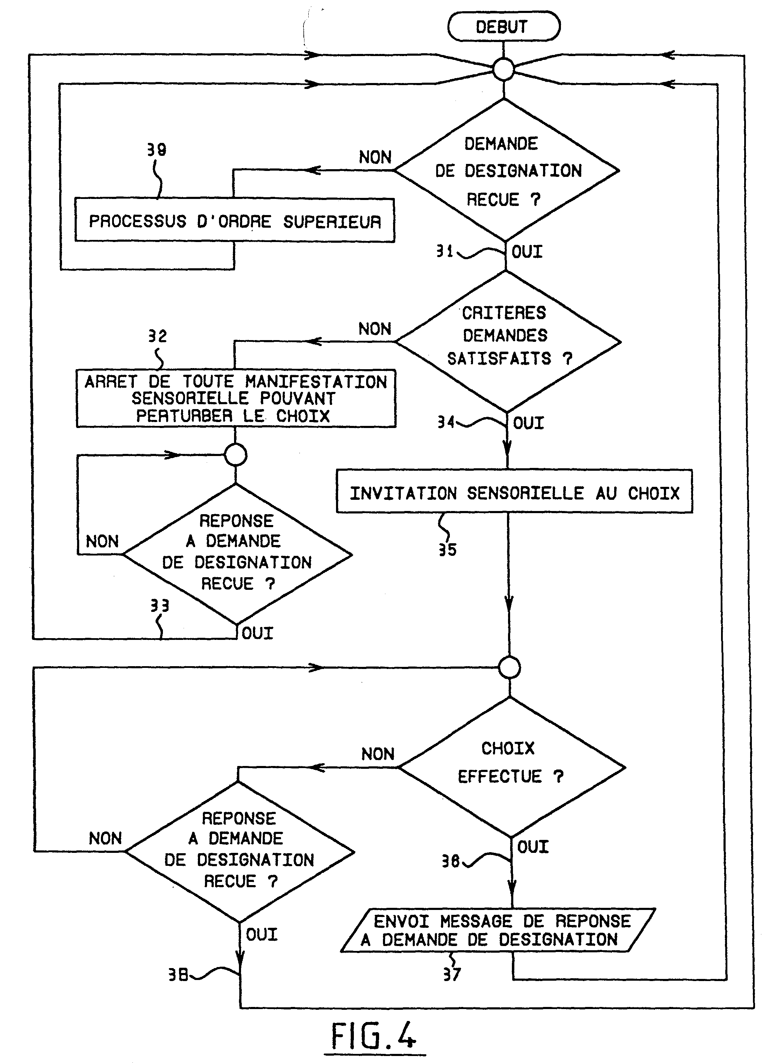

Le troisième type d'unité fonctionnelle est capable aussi bien d'émettre des messages de demande de désignation que d'en recevoir. Le programme de désignation de ces unités comprend une partie selon l'organigramme de la figure 3 et une autre partie selon l'organigramme de la figure 4.

Dans la suite du fonctionnement de l'installation, la désignation qui a été faite de la manière que l'on vient de décrire en détail aura une signification qui est définie par le processus d'ordre supérieur qui régissait l'unité ayant lancé la demande de désignation, au moment où elle l'a lancé : par exemple l'unité désignée sera désormais connue du processus d'ordre supérieur comme devant recevoir par le réseau un ordre de mise en marche lorsqu'une commande prédéterminée est actionnée ou un évènement prédéterminé survient dans une autre unité fonctionnelle du réseau, par exemple celle ayant lancé la demande.

Dans un autre mode de mise en oeuvre l'invention est applicable pour attribuer à un objet fonctionnel une adresse de réseau, c'est à dire une sorte de mot de passe identique pour tous les objets fonctionnels que l'on souhaite faire communiquer entre eux en réseau. Chaque message échangé comportera l'adresse de réseau et seuls les objets ayant même adresse de réseau prendront en compte le message. On évite ainsi de perturber les réseaux voisins, et on a la possibilité de créer deux réseaux indépendants ou plus dans un même local.

On n'exposera pas ici en détail les moyens et procédés pour attribuer une adresse de réseau à un premier objet. Cela est possible par chargement d'une mémoire, entre autres procédés. On suppose ainsi qu'au moins un objet a déjà une adresse de réseau et on va décrire le procédé pour donner la même adresse de réseau à un second objet qu'on désire faire communiquer avec le premier. Lorsqu'on branche sur le réseau le second objet, n'ayant pas d'adresse de réseau, ou lorsqu'on le met en fonctionnement par le bouton marche-arrêt, ou encore lorsqu'on appuie sur un bouton spécifique, ou enfin lorsqu'on appuie sur n'importe quel bouton de l'appareil, le second objet émet un message de demande de désignation qu'on appelle demande d'adresse de réseau. Tous les objets fonctionnels reliés à l'espace de communication (par exemple le système de distribution électrique du local) et qui ont déjà une adresse de réseau émettant une excitation sensorielle. L'utilisateur désigne un objet fonctionnel avec lequel il veut que l'objet nouvellement installé puisse communiquer. L'objet fonctionnel désigné émet un message de réponse comportant notamment son adresse de réseau. L'objet nouvellement installé prend en compte le message de réponse en adoptant dans sa propre adresse l'adresse de réseau de l'objet désigné.

Dans le cas où la session de recherche d'adresse de réseau a été lancée par appui sur n'importe quel bouton de l'appareil, ce bouton reprend sa fonction normale d'exploitation de l'appareil lorsque l'adresse de réseau est acquise ou au plus tard lorsque d'autres étapes du processus supérieur de mise en correspondance ont été effectuées.

L'invention n'est pas limitée aux exemples décrits et représentés.

On peut concevoir que les objets recevant les demandes de désignation restent régis par un programme spécifique tant que l'objet ayant lancé la demande de désignation est lui-même régi par un processus d'ordre supérieur spécifique, tel qu'un processus de configuration, nécessitant un dialogue spécifique avec les autres objets de l'installation.

## Revendications

1. Procédé de désignation d'un objet distant dans un réseau de communication bidirectionnel reliant entre eux des objets fonctionnels d'un local, caractérisé par les étapes suivantes :
- émission sur le réseau (2) par un premier objet fonctionnel (1), d'un message de demande de désignation (22);
- réception (31) du message de demande de désignation par d'autres objets fonctionnels (1) du réseau (2) et production, par certains au moins des autres objets fonctionnels, d'une excitation sensorielle (35) perceptible par un opérateur ;
- action physique directe, par l'opérateur, sur un second objet fonctionnel (1) parmi ceux qui produisent l'excitation sensorielle ;
- émission par le second objet fonctionnel (1) d'un message (37) de réponse à la demande de désignation, comportant des informations relatives au second objet fonctionnel ; et
- prise en compte du message de réponse par le premier objet fonctionnel.

2. Procédé selon la revendication 1, caractérisé en ce que le message de demande de désignation comprend des informations de restriction de choix, susceptibles de limiter le nombre d'autres objets fonctionnels (1) qui produisent une excitation sensorielle en conséquence de la réception du message de demande de désignation.

3. Procédé selon la revendication 2, caractérisé en ce que certains au moins desdits autres objets fonctionnels recevant le message de demande de désignation comparent les informations de restriction de choix avec des données qui sont propres à ces autres objets fonctionnels, et omettent de produire une excitation sensorielle (32) si la comparaison révèle qu'ils ne sont pas concernés par le message de demande de désignation.

4. Procédé selon la revendication 3, caractérisé par les étapes suivantes concernant lesdits autres objets fonctionnels qui omettent de produire une excitation sensorielle :
- passage en session de désignation provoqué par la réception du message de demande de désignation ;
- attente de réception d'un message de réponse à la demande de désignation pour sortir de la session de désignation

5. Procédé selon l'une des revendications 1 à 3, caractérisé en ce que la réception d'un message de demande de désignation par lesdits autres objets fonctionnels provoque le passage des autres objets fonctionnels en session de désignation, gérée par un programme de désignation.

6. Procédé selon l'une des revendications 1 à 5, caractérisé en ce que la réception, par le premier objet fonctionnel, du message de réponse à la demande de désignation clôt une session de désignation.

7. Procédé selon la revendication 6, caractérisé en ce que la clôture de la session de désignation fait passer automatiquement le premier objet fonctionnel à une phase suivante d'un processus d'ordre supérieur.

8. Procédé selon la revendication 7, caractérisé en ce que le passage à la phase suivante modifie la fonction d'au moins un moyen d'interface (3, 4) du premier objet fonctionnel avec un opérateur.

9. Procédé selon l'une des revendications 1 à 8, caractérisé en ce que le message de demande de désignation modifie temporairement la fonction d'au moins un moyen d'interface (4) desdits certains objets fonctionnels avec un opérateur, de façon que ce moyen d'interface (4) ayant usuellement un rôle indicateur d'une fonction de l'objet fonctionnel (1) produise ladite excitation sensorielle suite à la réception du message de demande de désignation.

10. Procédé selon l'une des revendications 1 à 9, caractérisé par une temporisation lancée au début du procédé et réinitialisée à chaque action de l'opérateur, et par une clôture anticipée de la session de désignation si cette temporisation arrive à son terme.

11. Procédé selon l'une des revendications 1 à 11, caractérisé en ce que l'opérateur, pour ladite action physique directe, actionne une commande quelconque (3) dudit second objet fonctionnel, et en ce qu'en session de désignation cette action provoque, quelle que soit la commande actionnée, l'émission d'un message de réponse à la demande de désignation, le contenu de ce message de réponse étant semblable quelle que soit la commande actionnée.

12. Procédé selon l'une des revendications 1 à 11, caractérisé en ce que le message de réponse à la demande de désignation contient un élément d'adresse de réseau, et en ce que la prise en compte du message de réponse consiste pour le premier objet à adopter dans sa propre adresse ledit élément d'adresse de réseau.

13. Unité fonctionnelle (1), comprenant au moins un objet fonctionnel adapté pour la mise en oeuvre du procédé selon l'une des revendications 1 à 12, comprenant un micro-contrôleur (11) relié à des moyens d'entrée/sortie (13) et à un réseau de communication bidirectionnel (2) via un moyen de transmission bidirectionnel (12), caractérisée en ce que le micro-contrôleur est agencé pour émettre, à la suite du déclenchement par un processus d'ordre supérieur de l'ouverture d'une session de désignation directe d'objet distant, un message de demande de désignation (22) et pour attendre la réception d'un message de réponse comportant des informations nécessaires pour que ledit processus d'ordre supérieur puisse retrouver ultérieurement l'objet fonctionnel ainsi désigné, ladite session de désignation directe étant avortée si aucun message de réponse n'est reçu par le micro-contrôleur (11) au-delà d'une durée de temporisation prédéterminée.

14. Unité fonctionnelle selon la revendication 13, caractérisée en ce que le micro-contrôleur (11) est agencé pour recevoir un message de demande de désignation (31), pour commander la production d'une excitation sensorielle (35), pour détecter une action de l'opérateur sur les moyens d'entrée/sortie, et pour envoyer un message sur le réseau de communication en cas d'une telle action de l'opérateur (37).

15. Unité fonctionnelle (1) comprenant au moins un objet fonctionnel adapté pour la mise en oeuvre du procédé selon l'une des revendications 1 à 12, comprenant un micro-contrôleur (11) relié à des moyens d'entrée/sortie (13) et à un réseau de communication (2) via un moyen de transmission bidirectionnel (12), caractérisée en ce que le micro-contrôleur (11) est agencé pour recevoir un message de demande de désignation après ouverture d'une session de désignation directe, pour commander alors la production d'une excitation sensorielle (35), pour détecter une action de l'opérateur sur les moyens d'entrée/sortie (3) pour envoyer un message sur le réseau de communication (2) en cas d'une telle action de l'opérateur (37), ladite unité fonctionnelle retrouvant sa fonction normale après fermeture de la session de désignation directe.

16. Unité fonctionnelle selon la revendication 14 ou 15, caractérisée en ce que l'un au moins desdits moyens d'entrée/sortie (4) coopère avec le micro-contrôleur (11) pour produire, en dehors des sessions de désignation, une excitation sensorielle pour signaler une fonction propre de l'unité fonctionnelle.

17. Unité fonctionnelle selon l'une des revendications 14 ou 16, caractérisée en ce que l'un au moins desdits moyens d'entrée/sortie (3) coopère avec le micro-contôleur (11) pour détecter, en dehors des sessions de désignation, une action de l'opérateur.

## Patentansprüche

1. Verfahren zur Bestimmung eines entfernten Objekts in einem bidirektionalen Kommunikationsnetz, das funktionale Objekte einer Räumlichkeit miteinander verbindet, gekennzeichnet durch die folgenden Etappen:
- Aussendung einer Bestimmungsanforderungsmeldung (22) an das Netz (2) durch ein erstes funktionales Objekt (1);
- Erhalt (31) der Bestimmungsanforderungsmeldung durch andere funktionale Objekte (1) des Netzwerkes (2) und Erzeugung einer sensorischen Erregung (35) durch zumindest einige der anderen funktionalen Objekte, die von einer Bedienungsperson wahrnehmbar ist;
- direkte physische Betätigung eines zweiten funktionalen Objektes (1) durch die Bedienungsperson, eines von jenen, die die sensorische Erregung erzeugen;
- Aussendung einer Antwortmeldung (37) auf die Bestimmungsanforderung durch das zweite funktionale Objekt (1), die Informationen über das zweite funktionale Objekt enthält; und
- Berücksichtigung der Antwortmeldung durch das erste funktionale Objekt.

2. Verfahren nach Anspruch 1, dadurch gekennzeichnet, daß die Bestimmungsanforderungsmeldung Informationen zur Einschränkung der Auswahl enthält, die die Anzahl von anderen funktionalen Objekten (1), die eine sensorische Erregung als Folge des Erhalts der Bestimmungsanforderungsmeldung erzeugen, begrenzen können.

3. Verfahren nach Anspruch 2, dadurch gekennzeichnet, daß zumindest einige der anderen funktionalen Objekte, die die Bestimmungsanforderungsmeldung erhalten, die Wahleinschränkungsinformationen mit Daten vergleichen, die diesen anderen funktionalen Objekten eigen sind, und keine sensorische Erregung (32) erzeugen, wenn der Vergleich zeigt, daß sie nicht von der Bestimmungsanforderungsmeldung betroffen sind.

4. Verfahren nach Anspruch 3, gekennzeichnet durch die folgenden Etappen, die die anderen funktionalen Objekte betreffen, die keine sensorische Erregung erzeugen:
- Übergang in die Bestimmungsphase, hervorgerufen durch den Erhalt der Bestimmungsanforderungsmeldung;
- Warten auf den Erhalt einer Antwortmeldung auf die Bestimmungsanforderung, um aus der Bestimmungsphase auszusteigen.

5. Verfahren nach einem der Ansprüche 1 bis 3, dadurch gekennzeichnet, daß der Erhalt einer Bestimmungsanforderungsmeldung durch diese anderen funktionalen Objekte den Übergang der anderen funktionalen Objekte in die Bestimmungsphase bewirken, welche durch ein Bestimmungsprogramm gesteuert wird.

6. Verfahren nach einem der Ansprüche 1 bis 5, dadurch gekennzeichnet, daß der Erhalt der Antwortmeldung auf die Bestimmungsanforderung durch das erste funktionale Objekt eine Bestimmungsphase schließt.

7. Verfahren nach Anspruch 6, dadurch gekennzeichnet, daß das Schließen der Bestimmungsphase das erste funktionale Objekt automatisch in eine folgende Phase eines Verfahrens höherer Ordnung übergehen läßt.

8. Verfahren nach Anspruch 7, dadurch gekennzeichnet, daß der Übergang in die folgende Phase die Funktion von zumindest einem Schnittstellenmittel (3, 4) des ersten funktionalen Objekts mit der Bedienungsperson verändert.

9. Verfahren nach einem der Ansprüche 1 bis 8, dadurch gekennzeichnet, daß die Bestimmungsanforderungsmeldung vorübergehend die Funktion von zumindest einem Schnittstellenmittel (4) der gewissen funktionalen Objekte mit einer Bedienungsperson verändert, so daß dieses Schnittstellenmittel (4), das üblicherweise eine Anzeigerolle für eine Funktion des funktionalen Objekts (1) innehat, die sensorische Erregung nach dem Erhalt der Bestimmungsanforderungsmeldung erzeugt.

10. Verfahren nach einem der Ansprüche 1 bis 9, gekennzeichnet durch eine Verweilzeit, die zu Beginn des Verfahrens gestartet und bei jeder Betätigung durch die Bedienungsperson und bei einer vorzeitigen Schließung der Bestimmungsphase neu initialisiert wird, falls diese Verweilzeit abgelaufen ist.

11. Verfahren nach einem der Ansprüche 1 bis 11, dadurch gekennzeichnet, daß die Bedienungsperson für diese direkte physische Betätigung irgendeine Steuerung (3) des zweiten funktionalen Objekts betätigt und daß in der Bestimmungsphase diese Betätigung unabhängig von der betätigten Steuerung die Aussendung einer Antwortmeldung auf die Bestimmungsanforderung bewirkt, wobei der Inhalt dieser Antwortmeldung ähnlich ist, unabhängig von der betätigten Steuerung.

12. Verfahren nach einem der Ansprüche 1 bis 11, dadurch gekennzeichnet, daß die Antwortmeldung auf die Bestimmungsanforderung ein Netzadressenelement enthält und daß die Berücksichtigung der Antwortmeldung für das erste Objekt darin besteht, in seiner eigenen Adresse dieses Netzadressenelement zu übernehmen.

13. Funktionale Einheit (1), bestehend aus mindestens einem funktionalen Objekt, das für den Einsatz des Verfahrens nach den Ansprüchen 1 bis 12 geeignet ist, bestehend aus einer Mikroablaufsteuerung (11), die mit Eingangs/Ausgangsmitteln (13) und einem bidirektionalen Kommunikationsnetz (2) über ein bidirektionales Übertragungsmittel (12) verbunden ist, dadurch gekennzeichnet, daß die Mikroablaufsteuerung derart ausgeführt ist, daß sie nach Auslösung der Eröffnung einer Phase der direkten Bestimmung eines entfernten Objekts durch ein Verfahren höherer Ordnung eine Bestimmungsanforderungsmeldung (22) aussendet und auf den Erhalt einer Antwortmeldung wartet, die die erforderlichen Informationen enthält, damit das Verfahren höherer Ordnung später das auf diese Weise bestimmte funktionale Objekt wiederfinden kann, wobei die direkte Bestimmungsphase abgebrochen wird, wenn über eine vorbestimmte Verweildauer hinaus keine Antwortmeldung durch die Mikroablaufsteuerung (11) erhalten wird.

14. Funktionale Einheit nach Anspruch 13, dadurch gekennzeichnet, daß die Mikroablaufsteuerung (11) derart ausgeführt ist, daß sie eine Bestimmungsanforderungsmeldung (31) erhält, um die Erzeugung einer sensorischen Erregung (35) zu steuern, um eine Betätigung der Eingangs/Ausgangselemente durch die Bedienungsperson zu erfassen und um eine Meldung an das Kommunikationsnetz zu senden, falls eine solche Betätigung durch die Bedienungsperson (37) stattgefunden hat.

15. Funktionale Einheit (1), bestehend aus mindestens einem funktionalen Objekt, das für den Einsatz des Verfahrens nach einem der Ansprüche 1 bis 12 geeignet ist, bestehend aus einer Mikroablaufsteuerung (11), die mit Eingangs/Ausgangsmitteln (13) und einem Kommunikationsnetz (2) über ein bidirektionales Übertragungsmittel (12) verbunden ist, dadurch gekennzeichnet, daß die Mikroablaufsteuerung (11) derart ausgeführt ist, daß sie nach Eröffnung einer direkten Bestimmungsphase eine Bestimmungsanforderungsmeldung erhält, um nun die Erzeugung einer sensorischen Erregung (35) zu steuern, um eine Betätigung der Eingangs-/Ausgangsmittel (3) durch die Bedienungsperson zu erfassen, um eine Meldung an das Koummunikationsnetz (2) zu senden, falls eine solche Betätigung durch die Bedienungsperson (37) stattgefunden hat, wobei die funktionale Einheit nach dem Schließen der direkten Bestimmungsphase ihre normale Funktion wieder aufnimmt.

16. Funktionale Einheit nach Anspruch 14 oder 15, dadurch gekennzeichnet, daß mindestens eines der Eingangs-/Ausgangsmittel (4) mit der Mikroablaufsteuerung (11) zusammenwirkt, um außerhalb der Bestimmungsphasen eine sensorische Erregung zu erzeugen, um eine Eigenfunktion der funktionalen Einheit anzuzeigen.

17. Funktionale Einheit nach einem der Ansprüche 14 oder 16, dadurch gekennzeichnet, daß mindestens eines der Eingangs-/Ausgangsmittel (3) mit der Mikroablaufsteuerung (11) zusammenwirkt, um außerhalb der Bestimmungsphasen eine Betätigung durch die Bedienungsperson zu erfassen.

## Claims

1. Process for designating a remote functional object in a bidirectional communication network connecting together functional objects within a dwelling, characterized by the following stages:
- transmission of a designation request message (22) via the network (2) by a first functional object (1);
- reception (31) of the designation request message by other functional objects (1) in the network (2) and production by at least some of the other functional objects of a sensory stimulus (35) which is perceptible to an operator;
- direct physical action, by the operator, on a second functional object (1) among those which produce the sensory stimulus;
- transmission by the second functional object (1) of an answer message (37) to the designation request, containing information relative to the second functional object; and
- acceptance of the answer message, by the first functional object.

2. Process according to claim 1, characterized in that the designation request message contains choice restriction information, capable of limiting the number of other functional objects (1) which produce a sensory stimulus as a result of receiving the designation request message.

3. Process according to claim 2, characterized in that at least some of said functional objects receiving the designation request message compare the choice restriction information with data specific to these other functional objects and neglect to produce a sensory stimulus (32) if the comparison reveals that they are not affected by the designation request message.

4. Process according to claim 3, characterized by the following stages concerning said other functional objects which neglect to produce a sensory stimulus:
- change over to designation session caused by the reception of a designation request message;
- waiting for the reception of an answer message in response to the designation request in order to leave the designation session.

5. Process according to one of claims 1 to 3, characterized in that the reception of a designation request message by the said other functional objects causes the other functional objects to change over to a designation session, managed by a designation program (16).

6. Process according to one of claims 1 to 5, characterized in that reception by the first functional object, of an answer message in response to the designation request terminates a designation session.

7. Process according to claim 6, characterized in that the termination of the designation session automatically makes the first functional object change over to the next phase of the higher order process.

8. Process according to claim 7, characterized in that changing over to the next phase modifies the function of at least one interface means (3, 4) of the first functional object with the operator.

9. Process according to one of claims 1 to 8, characterized in that the designation request message temporarily modifies the function of at least one interface means (4) of the said certain functional objects with an operator, so that this interface means (4) which usually has the role of indicating a function of the functional object (1) produces the said sensory stimulus after reception of the designation request message.

10. Process according to one of claims 1 to 9, characterized in that a time-out is initiated at the start of the process and reset with each action by the operator, and by anticipated termination of the designation session if this time-out expires.

11. Process according to one of claims 1 to 11, characterized in that the operator, for the said direct physical action, actuates any control (3) of said second functional object, and in that when in a designation session this action causes, whatever the actuated control, the transmission of an answer message in response to the designation request, the contents of this answer message being similar whatever the actuated control.

12. Process according to one of claims 1 to 11, characterized in that the answer message to the designation request contains a network address element, and in that the acceptance of the answer message involves, for the first object, adopting the said network address element in its own address.

13. Functional unit (1), containing at least one functional object suitable for the implementation of the process according to one of claims 1 to 12, comprising a microcontroller (11) connected to input/output means (13) and to a bidirectional transmission means (12) through a bidirectional communication network, characterized in that the microcontroller (11) is arranged for transmitting, after the initiation by a higher order process of the opening of a remote-object direct designation request session, a designation request message (22), and for waiting for the reception of an answer message containing information required for permitting said higher order process to later recover the such designated functional object, said direct designation session being aborted if no answer message is received by the microcontroller (11) beyond a predetermined time-out duration.

14. Functional unit according to claim 13, characterized in that the microcontroller (11) is arranged for receiving a designation request (31), controlling of the production of a sensory stimulus (35), detecting an action by the operator on the input/output means and ,sending a message via the communication network in the event of such an action by the operator (37).

15. Functional unit containing at least one functional object suitable for the implementation of the process according to claims 1 to 12, comprising a microcontroller (11) connected to input/output means (13) and to a communication network (2) via means of bidirectional transmission (12), characterized in that the microcontroller is arranged for receiving a designation request message after the opening of a direct designation session, then controlling the production of a sensory stimulus (35), detecting an action by the operator on the input/output means (3), and sending a message on the communication network (2) in the event of such an action by the operator (37), said functional unit recovering its normal function after closing of the direct designation session.

16. Functional unit according to claim 14 or 15, characterized in that at least one of said input/output means (4) cooperate with the microcontroller (11) for producing, outside the designation sessions, a sensory stimulus for indicating a particular function of the functional unit.

17. Functional unit according to one of claims 14 to 16, characterized in that at least one of said input/output means (3) cooperate with the microcontroller (11) for detecting, outside designation sessions, an operator action.
